# EUROPÄISCHE PATENTSCHRIFT

(11) **EP 3 413 587 B1**
(45) Veröffentlichungstag und Bekanntmachung des Hinweises auf die Patenterteilung: **22.04.2020**
(21) Anmeldenummer: 18170911.4
(22) Anmeldetag: 04.05.2018
(51) Int. Cl.: H04R 25/00, H02J 50/10

(54) **HÖRGERÄT, INSBESONDERE HINTER-DEM-OHR-HÖRHILFEGERÄT**
HEARING AID, IN PARTICULAR BEHIND THE EAR HEARING AID
APPAREIL AUDITIF, EN PARTICULIER APPAREIL DE CORRECTION AUDITIVE DERRIÈRE L'OREILLE

(30) Priorität: 09.06.2017 DE 102017209813
(43) Veröffentlichungstag der Anmeldung: 12.12.2018
(73) Patentinhaber: Sivantos Pte. Ltd., Singapore 539775 (SG)
(72) Erfinder: NIKLES, Peter, 91054 Erlangen (DE); SÜDEKUM, Sebastian, 39116 Magdeburg (DE)
(74) Vertreter: FDST Patentanwälte

(56) Entgegenhaltungen:
- EP-A1- 2 672 733
- EP-A1- 2 824 942
- EP-A1- 3 113 316
- WO-A1-2011/031233
- US-A1- 2015 036 854

## Beschreibung

Die Erfindung betrifft ein Hörgerät, insbesondere Hinter-dem-Ohr-Hörhilfegerät, mit einer Sende- und/oder Empfangseinheit mit einem Antennenelement zur drahtlosen Funkkommunikation sowie zur induktiven Energieübertragung eines Energiespeichers. Das Hörgerät ist bevorzugt ein Hörhilfegerät.

Personen, die unter einer Verminderung des Hörvermögens leiden, verwenden ein Hörgerät als Hilfsinstrument oder Hörhilfegerät. Dabei wird der Schall oder ein Schallsignal der Umgebung über einen elektromechanischen Schallwandler erfasst, der den Schall bzw. das Schallsignal in ein elektrisches Signal (Audiosignal) wandelt. Das elektrische Signal wird mittels einer Verstärkerschaltung bearbeitet und mittels eines weiteren elektromechanischen Wandlers in ein verstärktes Schallsignal umgewandelt, das in den Gehörgang der Person eingeleitet wird.

Es sind unterschiedliche Ausführungen von Hörgeraten bekannt. So werden sogenannte "Hinter-dem-Ohr-Geräte" zwischen Schädel und Ohrmuschel getragen, wobei das verstärkte Schallsignal mittels eines Schallschlauchs in den Gehörgang der Person eingeleitet wird. Eine weitere Ausführung eines Hörgeräts ist ein "Im-Ohr-Gerät", bei dem das Hörgerät selbst in den Gehörgang eingebracht wird. In Folge dessen wird der Gehörgang zumindest teilweise verschlossen, so dass mit Ausnahme des mittels des Hörgeräts erzeugten Schallsignals kein weiterer Schall oder lediglich stark gedämpfter Schall in den Gehörgang eindringen kann.

Sofern die Person unter einer Beeinträchtigung des Hörvermögens beider Ohren leidet, wird ein Hörgerätesystem mit zwei derartigen Hörgeräten als Hörhilfegeräte verwendet, wobei jedem Ohr jeweils eines der beiden Hörgeräte zugeordnet ist. Um der Person ein räumliches Hören zu ermöglichen, ist es erforderlich, dass die mit einem Hörgerät erfassten Audiosignale dem jeweils anderen Hörgerät zur Verfügung gestellt werden. Eine typischerweise drahtlose Funkkommunikation zwischen den beiden Hörgeräten erfolgt dabei mittels einer Antenne (Antennenelement).

Das jeweilige Hörgerät wird mittels eines in ein Gerätegehäuse eingebrachten und wiederaufladbaren Energiespeichers betrieben. Das Hörgerät kann zum Zwecke des Ladens des Energiespeichers in eine Ladestation eingebracht werden, die induktiv mit einer Ladevorrichtung des Hörgeräts gekoppelt ist und somit Energie drahtlos an den Energiespeicher überträgt. Dabei werden beim Ladevorgang auf Grund eines magnetischen Wechselfeldes in den metallischen Schalen des Energiespeichers Wirbelströme induziert, die eine unerwünschte Wärmeentwicklung bedingen.

Aus der EP 2 824 942 A1 ist ein Hörgerät mit einer Antenne zur Kommunikation mit einem weiteren Gerät bekannt. Die Antenne umfasst ein mit einer Schaltung verbundenes erstes Antennenelement und mindestens ein mit dem ersten Antennenelement induktiv gekoppeltes zweites Antennenelement. Der Leiterkreis des zweiten Antennenelements ist dabei als ein Draht oder als eine Kupferspur auf einer flexiblen Leiterplatte ausgebildet, welche um einen Teil der Schaltung gewickelt ist.

In der US 2015/0036854 A1 ist ein Hörgerät mit einer Antenne offenbart, welche anhand einer Speiseleitung mit einer Kommunikationsschaltung verbunden ist. Dabei sind die Antenne und die Speiseleitung mittels einer flexiblen Leiterplatte gebildet.

In der EP 3 113 316 A1 ist ein Hörgerät dargestellt, deren Energieempfangsmodul zwei Spulen aufweist. Dabei sind eine Leiterplatte und eine Batterie zumindest teilweise an einem Innenumfang der Spulen des Energieempfangsmoduls angeordnet.

In der WO 2011/031233 A1 ist ein Hörgerät angegeben, deren Empfangsspule eine Batterie umfangsseitig umfasst.

Der Erfindung liegt die Aufgabe zugrunde, ein besonders geeignetes Hörgerät anzugeben, bei dem der Energiespeicher mit möglichst raumsparenden Mitteln induktiv geladen wird. Dabei soll insbesondere eine Wärmeentwicklung im Energiespeicher durch Wirbelstromverluste auf Grund des magnetischen Wechselfeldes möglichst vermieden werden.

Diese Aufgabe wird erfindungsgemäß gelöst durch die Merkmale des Anspruchs 1. Vorteilhafte Ausgestaltungen und Weiterbildungen sind Gegenstand der Unteransprüche.

Das Hörgerät ist vorzugsweise ein Hörhilfegerät mit einem Gerätegehäuse und mit einer darin angeordneten (gehäuseinternen) Sende- und/oder Empfangseinheit, die ein mit einer Elektronik, beispielsweise mit einem integrierten Schaltkreis zur Signalverarbeitung, elektrisch kontaktiertes Antennenelement aufweist. Das Antennenelement dient zur drahtlosen Signalübertragung, insbesondere zur Funckommunikation mit einem zweiten Hörgerät, so dass die beiden Hörgeräte zumindest zeitweise signaltechnisch miteinander gekoppelt sind. Mittels der Funkkommunikation werden insbesondere Daten- und/oder Einstellungen zwischen den beiden Hörgeräten übertragen, wobei die Datenübertragung zweckmäßigerweise induktiv erfolgt.

Alternativ oder in Kombination kann dem Hörgerät eine Fernbedienung zugeordnet sein, die zur drahtlosen Funkkommunikation signaltechnisch mit dem Hörgerät oder gegebenenfalls mit den beiden Hörgeräten gekoppelt ist. Hierbei erfolgt zweckmäßigerweise wiederum eine induktive Übertragung von Daten, wie beispielsweise Konfigurationsdaten.

Insbesondere ist das oder jedes der Hörgeräte dafür vorgesehen und eingerichtet, zumindest teilweise in den Gehörgang eines Benutzers eingeführt zu werden. Zur Energieversorgung des Hörgeräts dient ein wiederaufladbarer Energiespeicher, beispielsweise ein Lithium-Ionen-Akkumulator, der im Gerätegehäuse bzw. im Hörgerät angeordnet oder in dieses eingebracht ist. Dabei dient das Antennenelement zusätzlich zur induktiven Energieübertragung, so dass in einem bestimmten Betriebsmodus mittels des Antennenelements ein drahtloses Laden des Energiespeichers des Hörgeräts ermöglicht ist.

Der Energiespeicher weist im Wesentlichen parallele und zueinander beabstandete Stirnseiten (Stirnseitenflächen) und einen Umfangsbereich auf, der aus geeigneter Weise einer umlaufenden, zu den Stirnseitenflächen des Energiespeichers senkrechten Mantelfläche gebildet ist.

Das Antennenelement ist als eine Folienstruktur ausgebildet und umgreift den Energiespeicher zumindest abschnittsweise. Die Folienstruktur weist dazu ein erstes und ein zweites sowie ein drittes Folienelement auf. Dabei sind das erste und das zweite Folienelement jeweils an den Stirnseiten des Energiespeichers angeordnet.

Das erste und/oder das zweite Folienelement überdecken zumindest teilweise die Stirnseitenfläche der jeweiligen Stirnseite. Das erste und/oder zweite Folienelement kann dabei beispielsweise eine Ringform aufweisen. Gemäß einer bevorzugten Ausgestaltung überdecken das erste und/oder das zweite Folienelement mindestens die halbe Stirnseitenfläche der jeweiligen Stirnseiten des Energiespeichers und sind dabei bevorzugt flächig ausgeführt. In anderen Worten weist das erste und zweite Folienelement im Verhältnis zu deren Ausdehnung parallel zur Stirnfläche eine geringe Foliendicke (senkrecht zu den Stirnseiten des Energiespeichers) auf.

Das dritte Folienelement verläuft im Einbauzustand quer zum ersten und zweiten Folienelement und übergreift vorzugsweise nur einen vergleichsweise kleinen Abschnitt des Umfangsbereichs des Energiespeichers. Dabei bildet das dritte Folienelement einen sich in Querrichtung zum ersten und zweiten Folienelement erstreckenden Spulenkern des Antennenelements. Der Spulenkern des Antennenelements ist mit einer Draht- oder Spulenwicklung aus einer Anzahl von Windungen versehen.

Die Windungen der Draht- oder Spulenwicklung können den Spulenkern umfangsseitig zum Beispiel entlang der vollständigen Ausdehnung in Querrichtung, d. h. in Längsrichtung des dritten Folienelementes umgeben. Bevorzugt jedoch ragt der Spulenkern aus der Draht- oder Spulenwicklung zumindest einseitig, vorzugsweise beidseitig, heraus. Geeigneter Weise ist die Draht- oder Spulenwicklung mit einer Elektronik elektrisch kontaktiert.

In vorteilhafter Ausgestaltung sind das erste, zweite und dritte Folienelement der Folienstruktur zusammenhängend ausgebildet. In einer denkbaren Ausführungsform können die Folienelemente auch aus Einzelteilen hergestellt sein, welche beispielsweise erst im Montageendzustand miteinander verbunden sind.

Auf Grund der Anordnung des ersten und des zweiten Folienelements an den im Wesentlichen parallel orientierten Stirnflächen des Energiespeichers und in Folge der Anordnung des dritten Folienelements am zu den Stirnflächen im Wesentlichen senkrechten Umfangsbereich des Energiespeichers, bildet das Antennenelement eine U-Form. Hierbei ist auf Grund der Abwinklung (Faltung) des ersten Folienelements und des zweiten Folienelements gegenüber dem dritten Folienelement und der Draht- oder Spulenwicklung sowie auf Grund der Ausbildung des Antennenelementes als Folie mit möglichst geringer Foliendicke der Platzbedarf verringert, so dass ein vergleichsweise kompaktes Antennenelement bereitgestellt ist, welches somit auch im nur wenig Bauraum bietenden Gerätegehäuse des Hörgerätes untergebracht werden kann.

Das Antennenelement ist aus einem ferromagnetischen und/oder ferrimagnetischen Material gefertigt. Geeigneter Weise ist das Antennenelement aus einem Ferrit gebildet. Vorteilhaft bestehen das erste Folienelement und das zweite Folienelement des folienartigen Antennenelements aus dem gleichen Material wie das dritte Folienelement.

In einer geeigneten Weiterbildung ist zwischen der Folienstruktur des Antennenelements und dem Energiespeicher eine Abschirmung angeordnet, insbesondere zwischen dem ersten Folienelement und dem Energiespeicher sowie zwischen dem zweiten Folienelement und dem Energiespeicher. Dabei ist die Abschirmung aus einem diamagnetischen und/oder paramagnetischen Material gebildet oder enthält diamagnetisches und/oder paramagnetisches Material mit vorzugsweise hoher Leitfähigkeit, beispielsweise Kupfer oder Aluminium Die Abschirmung ist geeigneter Weise ebenfalls eine Folie oder mittels einer Folie gebildet.

Vorteilhafter Weise weist das Antennenelement eine hohe Sensitivität und eine hohe Güte auf, wobei das Antennenelement nach Art einer Ferritstabantenne mit einer vergleichsweise großen Stirnfläche wirkt. Durch die Abschirmung ist ein Ausbreiten der Magnetfeldlinien von der dem Energiespeicher zugewandten Seite des ersten und zweiten Folienelements zum Energiespeicher hin vermieden. Vorzugsweise ist die Permeabilität der Folienstruktur des Antennenelements größer als die Permeabilität der Abschirmung, und die elektrische Leitfähigkeit des Materials der Abschirmung ist zweckmäßiger Weise größer als die elektrische Leitfähigkeit der Folienstruktur des Antennenelements. Infolgedessen werden Wirbelströme allenfalls und nur geringfügig in der Abschirmung hervorgerufen, wohingegen die Magnetfeldlinien in die Folienstruktur in das Antennenelement hineingedrängt werden und somit im Wesentlichen dort verlaufen. Aufgrund dessen sind die effektive Permeabilität und die Sensitivität des Antennenelements erhöht.

In einer bevorzugten Ausführung deckt die Abschirmung die Stirnseiten des Energiespeichers vollständig ab. Die Abschirmung ist dabei von der Folienstruktur des Antennenelements zumindest teilweise abgedeckt. Mit anderen Worten ist mit Ausnahme desjenigen Bereichs, in dem das dritte Folienelement mit dem ersten und zweiten Folienelement des Antennenelements gekoppelt ist, die Abschirmung von der Folienstruktur des Antennenelements vollständig abgedeckt. Der Umfang des Antennenelements fluchtet somit mit dem Umfang der Abschirmung. Alternativ ist die Folienstruktur gegenüber der Abschirmung verkleinert, so dass eine Projektion der Folienstruktur auf die Abschirmung von dieser vollständig überdeckt ist.

Die Sensitivität und die Güte des Antennenelements sind durch die Ausführung der Folienstruktur gegenüber der Abschirmung an betriebsgemäß auftretende Anforderungen anpassbar. Beispielsweise bedingt eine gegenüber der Abschirmung verkleinerte erste und zweite Folienstruktur eine verbesserte Güte des Antennenelements bei verringerter Sensitivität. Zusätzlich kann zwischen dem dritten Folienelement und dem Energiespeicher eine Abschirmung angeordnet sein, wodurch die Sensitivität und die Güte des Antennenelements an betriebsgemäß auftretende Anforderungen weiter anpassbar sind.

Durch die Abschirmung sowie durch die Folienstruktur ist ein Ausbreiten der Magnetfeldlinien von der dem Energiespeicher zugewandten Seite des ersten und zweiten Folienelements zum Energiespeicher hin vermieden. Dabei werden Wirbelstromverluste durch ein betriebsbedingtes, insbesondere ein durch den Ladevorgang des Energiespeichers bedingtes, magnetisches Wechselfeld allenfalls und nur geringfügig in der Abschirmung hervorgerufen. In Folge dessen sind Wirbelstromverluste und eine durch diese hervorgerufene Erwärmung im zwischen der Abschirmung angeordneten Energiespeicher besonders vorteilhaft vermieden, wodurch Schäden am Energiespeicher vermieden sind und eine erhöhte Lebensdauer des Energiespeichers gegeben ist.

Durch das Anordnen des Antennenelements praktisch direkt am Energiespeicher, und durch das Anordnen der Abschirmung zwischen der Folienstruktur des Antennenelements und dem Energiespeicher ist eine platzsparende Ausführungsform gebildet. In Folge dessen kann das Hörgerät kleiner ausgeführt, oder in das Hörgerät können zusätzliche Komponenten eingebracht werden. Wenn der Energiespeicher aus dem Material der Abschirmung gebildet ist, muss keine separate Abschirmung zur Einbringung zwischen der Folienstruktur und dem Energiespeicher bereitgestellt werden.

Vorteilhafter Weise sind das erste und zweite Folienelement der Folienstruktur des Antennenelements und die Abschirmung flächig und somit besonders wirksam ausgeführt. Des Weiteren werden durch die Abschirmung die Magnetfeldlinien in das Antennenelement hineingedrängt und verlaufen im Wesentlichen im Antennenelement. Zusätzlich sind auf Grund der größeren Permeabilität des Antennenelements gegenüber der Abschirmung sowie der größeren Leifähigkeit der Abschirmung gegenüber dem Antennenelement Wirbelstromverluste im Antennenelement vermieden. Die Sensitivität und die Güte des Antennenelements sind dadurch vorteilhaft verbessert. In Folge dessen ist die Energieübertragung mittels des magnetischen Wechselfeldes an den Energiespeicher verbessert, und die Ausrichtung oder Positionierung des Hörgeräts bezüglich des Ladegeräts kann beliebiger sein.

In einer denkbaren Ausführungsform sind das erste und das zweite Folienelement der Folienstruktur über weitere Bereiche des Hörgeräts, beispielsweise auch über das vollständige Hörgerät, angeordnet. Auf Grund der folienartigen Ausführung ist dadurch das Antennenelement platzsparend und kostengünstig vergrößert, wodurch eine Bandbreite sowie die Güte und Sensitivität des Antennenelements an die betriebsgemäßen Anforderungen angepasst werden kann.

In einer geeigneten Weiterbildung ist die Abschirmung in eine insbesondere flexible Leiterplatte integriert. Die flexible Leiterplatte weist dabei drei zusammenhängende Bereiche auf, an denen das erste, das zweite und/oder das dritte Folienelement der Folienstruktur angeordnet sind. Vorteilhafter Weise trägt die Leiterplatte dabei an der dem Energiespeicher zugewandten Plattenfläche eine elektronische Hörgerätekomponente, insbesondere der Sende- und/oder Empfangseinheit, oder beispielsweise eine Ladeelektronik in Form eines Ladechips, einen Funksystemchip und/oder Anschlüsse für den Energiespeicher.

Die Hörgerätekomponente ist dabei geeigneter Weise auf der dem Energiespeicher zugewandten Plattenfläche im Wesentlichen zentral auf einem Bereich der Leiterplatte angeordnet, an dem das erste und zweite Folienelement der Folienstruktur des Antennenelements anliegen. Dadurch ist die Hörgerätekomponente im Wesentlichen feldfrei positioniert und wird aufgrund der Magnetfelder nicht oder lediglich in einem geringen Maß gestört. Auch stört eine derartige Hörgerätekomponente ein Signal-Rausch-Verhältnis der Antenne bei Betrieb nicht oder lediglich in einem vergleichsweise geringen Maße, d.h. die Antenne und die Hörgerätekomponente weisen ein vergleichsweise geringes Übersprechen auf.

Insbesondere werden aufgrund der Abschirmung etwaige Magnetfelder abgeschirmt, die beispielsweise aufgrund eines stromdurchflossenen elektrischen Leiters oder einer Leiterbahn der Hörgerätekomponente hervorgerufen werden. Vorteilhaft ist durch die Integration der Abschirmung in eine insbesondere flexible Leiterplatte eine stabile Herstellung der Abschirmung gegeben. Zusätzlich ist die Hörgerätekomponente einfach und kostengünstig auf die Leiterplatte aufbringbar, beispielsweise durch Reflow-Löten.

Besonders vorteilhaft ermöglichen die Bildung des Antennenelements aus einer flexiblen Folie und das Einbringen der Abschirmung in eine flexible Leiterplatte eine einfache und fehlersichere Montage des Antennenelements und der Abschirmung. Die Montage erfolgt dabei ausgehend von einer planen Form durch Abwinkeln des ersten und zweiten Folienelements der Folienstruktur sowie der daran angeordneten Abschirmung. Das Abwinkeln (Knicken oder Falten) des ersten und zweiten Folienelements der Folienstruktur und der daran angeordneten Bereiche der flexiblen Leiterplatte erfolgt derart, dass das erste und zweite Folienelement der Folienstruktur sowie die Abschirmung an den Stirnseiten des Energieträgers anliegen.

In zweckmäßiger Ausgestaltung ist die Folienstruktur des Antennenelements zumindest teilweise in eine zumindest eine der Hörgerätekomponenten tragende Leiterplatte (Platine) integriert. Insbesondere ist das dritte Folienelement der Folienstruktur in die Platine eingebracht. Die Draht- oder Spulenwicklung um das den Spulenkern des Antennenelements bildende dritte Folienelement ist dabei aus Leiterbahnen der Platine hergestellt, wodurch eine aufwendige und empfindliche Wicklung der Draht- oder Spulenwicklung vermieden ist.

Gemäß einer vorteilhaften Ausführungsform ist der Energiespeicher zumindest teilweise von einem manschettenartigen Mantelschirm umgeben. In anderen Worten weist der Mantelschirm eine Breite auf, welche maximal der Breite des Umfangsbereichs. Der Mantelschirm ist dabei mittig zwischen die an dem ersten und dem zweiten Folienelement angebrachte Abschirmung angeordnet und dabei nicht zwingend (elektrisch) geschlossen. Der Mantelschirm ist zwischen der an den ersten und zweiten Folienelementen der Folienstruktur angebrachten Abschirmung sowie zwischen dem dritten Folienelement und dem Energiespeicher angeordnet. Der Mantelschirm ist vorzugsweise Bestandteil der Abschirmung, jedoch nicht zwingend mit diesem (galvanisch) verbunden.

Durch den Mantelschirm ist ein Eindringen der Magnetfeldlinien in den Energiespeicher vermieden, so dass Wirbelstromverluste durch ein, insbesondere während eines Ladevorgang des Energiespeichers, betriebsbedingtes magnetisches Wechselfeld allenfalls und nur geringfügig in der Abschirmung hervorgerufen werden. In Folge dessen sind Wirbelstromverluste und eine durch diese hervorgerufene Erwärmung des Energiespeichers mittels des zusätzlichen Mantelschirms besonders vorteilhaft vermieden. Auf Grund der manschettenartigen Ausführung des Mantelschirms ist zudem eine einfache Auswechselbarkeit des Energiespeichers sicher gestellt.

Die mit der Erfindung erzielten Vorteile bestehen insbesondere darin, dass durch die besonders geeignete Anordnung und Ausgestaltung des Antennenelements sowie gegebenenfalls der Abschirmung um den Energiespeicher beim induktiven und kabellosen Ladevorgang des Hörgeräts die Wärmeentwicklung im Energiespeicher des Hörgeräts auf Grund von Wirbelstromverlusten des magnetischen Wechselfeldes vermieden ist. Des Weiteren ist der Platzbedarf im Gerätegehäuse und somit im Hörgerät verringert. In der Folge kann das Hörgerät kleiner ausgeführt, oder es können zusätzliche Komponenten für weitere Funktionalitäten verbaut werden.

Das Hörgerät kann beispielsweise ein receiver-in-the-canal-Hörhilfegerät (RIC-Hörhilfegerät), ein Im-Ohr-Hörhilfegerät (in-the-ear-(ITE)Hörhilfegerät), ein in-the-canal-Hörhilfegerät (ITC) oder ein complete-in-canal-Hörhilfegerät (CIC) sein. Besonders bevorzugt ist das Hörhilfegerät ein Hinter-dem-Ohr-Hörhilfegerät (behind-the-ear-(BTE) Hörhilfegerät), das hinter einer Ohrmuschel getragen wird. Das Hörgerät kann Teil eines (binauralen) Hörgerätesystems sein, wobei jedem Ohr einer Person jeweils ein derartiges Hörgerät zugeordnet ist und Daten mittels drahtloser Funkkommunikation zwischen den Hörgeräten übertragen werden können.

Nachfolgend werden Ausführungsbeispiele der Erfindung anhand einer Zeichnung näher erläutert. Darin zeigen:
- Fig. 1: schematisch ein Hörgerätesystem mit zwei jeweils einen Energiespeicher und ein Antennenelement umfassenden Hörgeräten,
- Fig. 2: in einer perspektivischen Ansicht den vom Antennenelement und von einer Abschirmung stirnseitig abgedeckten Energiespeicher,
- Fig. 3: in einer Darstellung gemäß Figur 2 den zusätzlich von einem Mantelschirm manschettenartig umfangsseitig umschlossenen Energiespeicher,
- Fig. 4: in einer Seitenansicht den Energiespeicher gemäß Fig. 3 mit nur teilweise umfasstem Umfangsbereich,
- Fig. 5: in Draufsicht das auf einer flexiblen Leiterplatte angeordnete folienartige Antennenelement mit beidseitig eines eine Draht- oder Spulenwicklung tragenden Spulenkerns einem ersten und zweiten Folienelement,
- Fig. 6: die flexible Leiterplatte gemäß Fig. 5 in einer Rückansicht auf die im Montagezustand dem Energiespeicher zugewandte Plattenrückseite mit elektronischen Komponenten einer Sende- und/oder Empfangseinheit des Hörgerätes,
- Fig. 7: in perspektivischer Ansicht eine elektronische Komponenten tragende Hörgeräteplatine, in welche das Antennenelement teilweise integriert ist, und
- Fig. 8: einen vergrößerten Ausschnitt der Hörgeräteplatine entlang der Schnittlinie VIII-VIII der Fig. 7 mit einem dritten Folienelement des Antennenelements einer Kupferlage der Platine.

Einander entsprechende Teile sind in allen Figuren mit den gleichen Bezugszeichen versehen.

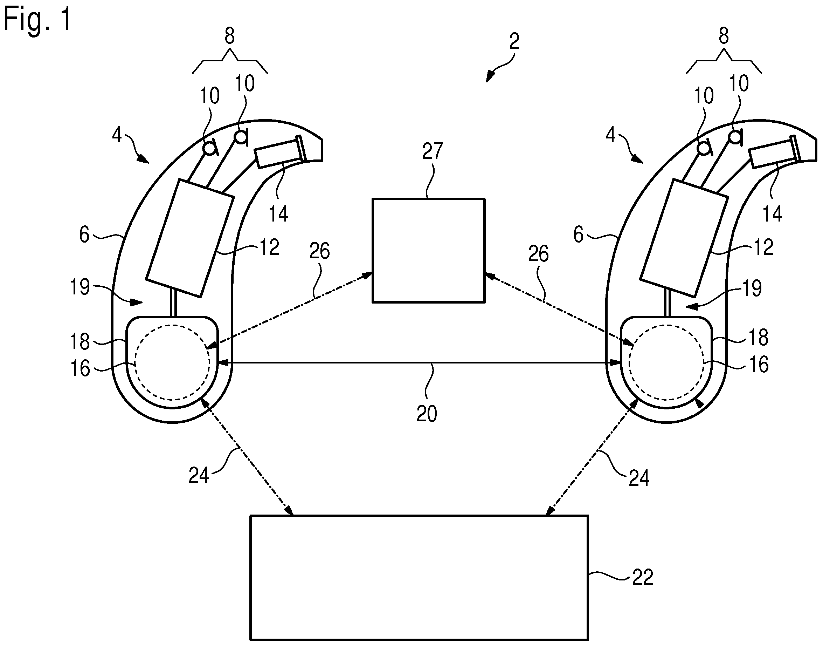

In Fig. 1 ist ein (binaurales) Hörhilfesystem 2 mit zwei baugleichen Hörgeräten 4 dargestellt. Die Hörgeräte 4 sind als Hörhilfegerät dazu vorgesehen und eingerichtet, hinter jeweils einem Ohr eines Benutzers (Träger) getragen zu werden. Mit anderen Worten handelt es sich jeweils um Hinter-dem-Ohr-Hörgeräte (BTE - Hörgerät), welches einen nicht dargestellten Schallschlauch aufweist, der in das Ohr eingeführt wird. Das jeweilige Hörgerät 4 umfasst ein beispielsweise aus einem Kunststoff gefertigtes Gehäuse 6. Innerhalb des Gehäuses 6 ist ein Mikrofon 8 mit zwei elektromechanischen Schallwandlern 10 angeordnet. Mittels der beiden Schallwandler 10 ist es ermöglicht, eine Richtcharakteristik des Mikrofons 8 zu verändern, indem ein zeitlicher Versatz elektrischer Signale verändert wird, welche mittels des jeweiligen Schallwandlers 10 aus erfassten Schallsignalen generiert werden. Die beiden elektromechanischen Schallwandler 10 sind mit einer Signalverarbeitungseinheit 12 signaltechnisch gekoppelt, die eine Verstärkerschaltung umfasst. Die Signalverarbeitungseinheit 12 weist elektrische und/oder elektronische (aktive und/oder passive) Bauteile und Schaltungselemente auf.

Ferner ist mit der Signalverarbeitungseinheit 12 ein Lautsprecher 14 signaltechnisch gekoppelt, mittels dessen die durch die Signalverarbeitungseinheit 12 bearbeiteten elektrischen Signale des Schallwandlers 10 erneut als Schallsignale ausgegeben werden. Diese Schallsignale werden mittels des nicht näher dargestellten Schallschlauchs in das Ohr eines Benutzers des Hörgerätesystems 2 geleitet.

Die Leistungsversorgung (Spannungs- und Stromversorgung) der Signalverarbeitungseinheit 12, des Mikrofons 8 und des Lautsprechers 14 jedes Hörgeräts 4 erfolgt mittels eines wiederaufladbaren (strichliniert dargestellten) Energiespeichers 16. Jedes der Hörgeräte 4 weist ferner ein Antennenelement 18 einer Sende- und/oder Empfangseinheit 19 auf, mittels derer eine drahtlose Funkkommunikation 20 zwischen den beiden Hörgeräten 4 ermöglicht ist. Das Antennenelement 18 umgreift dabei den Energiespeicher 16 teilweise. Die drahtlose Funkkommunikation 20 dient dem Austausch von Daten und erfolgt induktiv. Aufgrund des Austauschs der Daten ist es beispielsweise ermöglicht, dem Träger der Hörgeräte 4 ein räumliches Hörgefühl zu vermitteln.

In der Ausführung der Fig. 1 ist ferner ein weiteres Gerät 22 dargestellt, welches beispielsweise eine Fernbedienung oder ein Smartphone ist. Dieses weist eine nicht näher dargestellte Kommunikationseinrichtung auf, mit denen eine weitere, mittels der strichpunktierten Pfeile 24 angedeutete drahtlose Funkkommunikation mit den beiden Antennenelementen 18 der beiden Hörgeräte 4 erstellt ist. Die drahtlose Funkkommunikation dient dem Austausch von Daten zwischen dem weiteren Gerät 22 und den Hörgeräten 4.

Zusätzlich wird das Antennenelement 18 zur induktiven und drahtlosen Energieübertragung, symbolisiert durch die strichpunktierten Pfeile 26, von einem Ladegerät 27 an das Hörgerät 4 herangezogen, so dass in einem bestimmten Betriebsmodus mittels des Antennenelements 18 ein Laden des wiederaufladbaren Energiespeichers 16 des Hörgeräts 4 ermöglicht ist. Mit anderen Worten wird mittels des Antennenelements 18 induktiv Energie übertragen, welche zum Laden des Energiespeichers 16 genutzt wird.

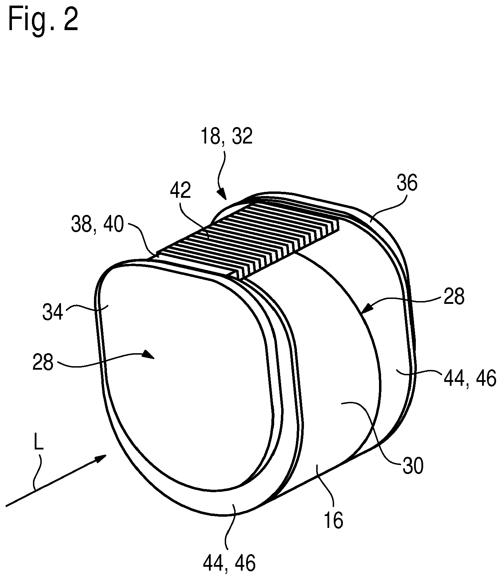

Die Figuren 2, 4 und 7 zeigen in perspektivischer Ansicht einen Energiespeicher 16, welcher eine Form aufweist, die zwei koaxial gelagerten, aufeinander angeordneten Zylindern entspricht, mit einer Längsrichtung L parallel zu den Zylinderachsen. Die gegenüberliegenden und beabstandeten ebenen Flächen der Zylinder bilden parallele Stirnseiten oder Stirnflächen 28 des Energiespeichers 16. Die Mantelflächen der beiden Zylinder bilden einen Umfangsbereich 30 des Energiespeichers 16.

Das Antennenelement 18 ist als eine Folienstruktur 32 aus einem ferro- oder ferrimagnetischen Material gebildet, wobei mittels des Antennenelements 18 die Stirnfläche der Stirnseite 28 des Energiespeichers 16 teilweise, insbesondere mehr als die halbe Stirnfläche der Stirnseite 28, abgedeckt ist. In Fig. 2 ist das Antennenelement 18 als eine Ferritfolie ausgeführt. Dabei weist die Folienstruktur 32 ein erstes und zweites Folienelement 34 bzw. 36 sowie ein drittes Folienelement 38 auf. Das erste und zweite Folienelement 34 und 36 sind an den gegenüberliegenden Stirnseiten 28 des Energiespeichers 16 parallel angeordnet und überdecken dabei die Stirnseiten bzw. Stirnflächen 28 des Energiespeichers 16.

Das erste Folienelement 34 der Folienstruktur 32 ist baugleich und symmetrisch zum zweiten Folienelement 36, wobei die Symmetrieebene senkrecht zur Längsrichtung L zwischen den beiden Folienelementen 34 und 36 verläuft. Das dritte Folienelement 38 übergreift den Umfangsbereich 30 des Energiespeichers 16 und verläuft quer zum ersten und zweiten Folienelement 34 und 36 in Längsrichtung L. Das dritte Folienelement 38 bildet dabei einen Spulenkern 40 des Antennenelements 18 und ist mit einer Draht- oder Spulenwicklung 42 versehen. Die Draht- oder Spulenwicklung 42 ist mit einer nicht dargestellten Elektronik elektrisch kontaktiert. Die Folienelemente 34, 36, 38 der Folienstruktur bilden eine U-Form, wobei das erste und das zweite Folienelement 34, 36 die U-Schenkel und das dritte Folienelement 38 den Verbindungsschenkel der U-Form bilden.

Die Folienelemente 34, 36, 38 sind bevorzugt flächig ausgeführt. In anderen Worten weist das erste und zweite sowie das dritte Folienelement 34, 36, 38 eine geringe Foliendicke senkrecht zu den Stirnseiten 28 beziehungsweise zum Umfangsbereich 30 des Energiespeichers 16 im Verhältnis zur Ausdehnung der Folienelemente 34, 36, 38 parallel zur Stirnfläche der Stirnseite 28 beziehungsweise zum Umfangsbereich 30 auf.

Des Weiteren ist jeweils zwischen dem ersten und zweiten Folienelement 34 und 36 der Folienstruktur 32 des Antennenelements 18 und dem Energiespeicher 16 eine Abschirmung 44 angeordnet. Die Abschirmung 44 ist aus einem dia- oder paramagnetischen Material gebildet oder enthält dia- oder paramagnetisches Material.

Im Ausführungsbeispiel der Fig. 2 ist die Abschirmung 44 als eine Kupferfolie 46 ausgeführt. Die Kupferfolie 46 ist vergleichsweise günstig und einfach anbringbar, weswegen Herstellungskosten reduziert sind. Die Abschirmung 44 ist vom ersten und zweiten Folienelement 34 und 36 der Folienstruktur 32 zumindest teilweise überdeckt.

Dabei ist im Ausführungsbeispiel der Fig. 2 die Folienstruktur das erste und zweite Folienelement 34 und 36 verkleinert gegenüber der Abschirmung 44, so dass eine Projektion der Folienstruktur auf die Abschirmung 44 entlang der Längsrichtung L, mit Ausnahme eines Bereichs, in dem das dritte Folienelement 38 mit dem ersten und zweiten Folienelement 34, 35 des Antennenelements 18 gekoppelt ist, vollständig von der Abschirmung 44 umfasst ist.

Durch das Anordnen des Antennenelements 18 direkt am Energiespeicher 16 und durch das Anordnen der Abschirmung 44 zwischen der Folienstruktur 32 des Antennenelements 18 und dem Energiespeicher 16 ist eine platzsparende Ausführungsform gebildet. In Folge dessen kann das Hörhilfegerät 4 besonders klein ausgeführt sein. Alternativ können in das Hörhilfegerät 4 zusätzliche Komponenten eingebracht werden.

Eine Sensitivität und eine Güte des Antennenelements 18 sind durch die Ausführungsform der Abschirmung 44 und die Ausführungsform des ersten und zweiten Folienelements 34, 36 auf die im Betrieb nötigen Anforderung angepasst, wobei das Antennenelement 18 nach Art einer Ferritstabantenne mit einer vergleichsweise großen Stirnfläche wirkt. Durch die Abschirmung 44 ist dabei ein Ausbreiten von Magnetfeldern von der dem Energiespeicher 16 zugewandten Seite des ersten und zweiten Folienelements 34 und 36 zum Energiespeicher 16 hin vermieden. Vielmehr werden diese in das Antennenelement 18 hineingedrängt und verlaufen somit im Wesentlichen dort, wodurch die Sensitivität des Antennenelements 18 verbessert ist.

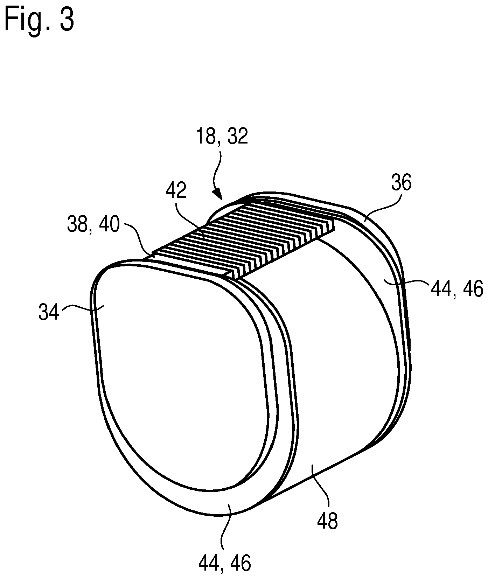

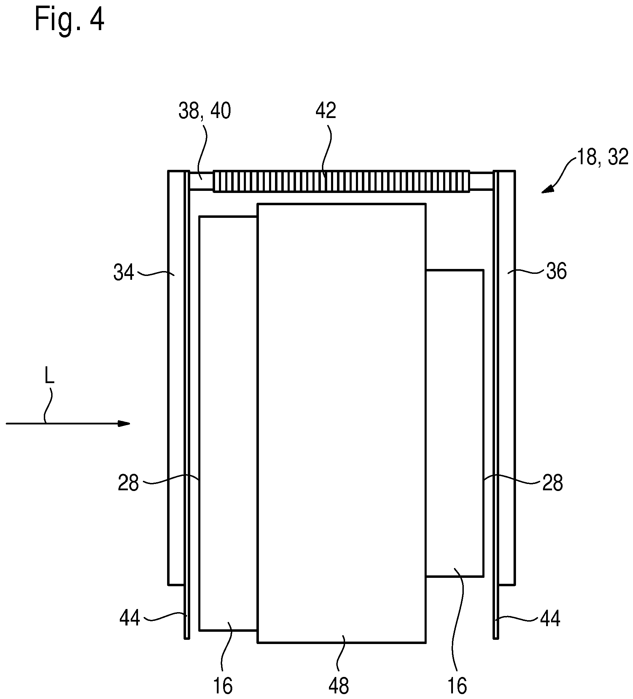

Die Figuren 3 und 4 zeigen den Energiespeicher 16 mit dem Antennenelement 18 und mit der Abschirmung 44 in einer Darstellung gemäß Fig. 2 bzw. in einer Seitenansicht. Bei der in Fig. 3 gezeigten Ausführung ist der Umfangsbereich 30 des Energiespeichers 16 zwischen dessen Stirnseiten 28 von einem manschettenartigen Mantelschirm 48 vollständig umfasst. In anderen Worten ist der Mantelschirm 48 entlang der Längsrichtung L derart gebildet, dass der gesamte Umfangsbereich 30 des Energiespeichers 16 vom Mantelschirm 48 abgedeckt ist. Der Mantelschirm 48 ist zwischen der an den ersten und zweiten Folienelementen 34 bzw. 36 der Folienstruktur 32 angebrachten Abschirmung 44 angeordnet.

Gemäß der Ausführungsform nach Fig. 4 ist der Umfangsbereich 30 des Energiespeichers 16 nur teilweise vom manschettenartigen Mantelschirm 48 umfasst. Der Mantelschirm 48 ist dabei mittig zwischen die an dem ersten und zweiten Folienelement 34 und 36 angebrachte Abschirmung 44 und beabstandet zu dies angeordnet. In beiden Ausführungen gemäß den Figuren 3 und 4 ist der Mantelschirm 48 zwischen dem dritten Folienelement 38 und dem Energiespeicher 16 angeordnet.

Der Mantelschirm 48 ist ein Bestandteil der Abschirmung 44 und ist vorzugsweise aus dem Material der Abschirmung 44, welche zwischen dem ersten bzw. zweiten Folienelement 34 bzw. 36 und dem Energiespeicher 16 angeordnet ist. Der Mantelschirm 44 ist hier als eine Kupferfolie ausgeführt.

Mittels der Folienstruktur 32 sowie mittels der Abschirmung 44 zwischen dem ersten und/oder zweiten Folienelement 34, 36 und dem Energiespeicher 16 und mittels des Mantelschirms 48 ist ein Eindringen von Magnetfeldern in den Energiespeicher 16 vermieden, so dass Wirbelstromverluste des magnetisches Wechselfeld allenfalls und nur geringfügig in der Abschirmung 44 hervorgerufen werden. In Folge dessen ist eine Erwärmung des Energiespeichers 16 vermieden. Auf Grund der manschettenartigen Ausführung des Mantelschirms 48 ist des Weiteren die Auswechselbarkeit des Energiespeichers 16 erhalten.

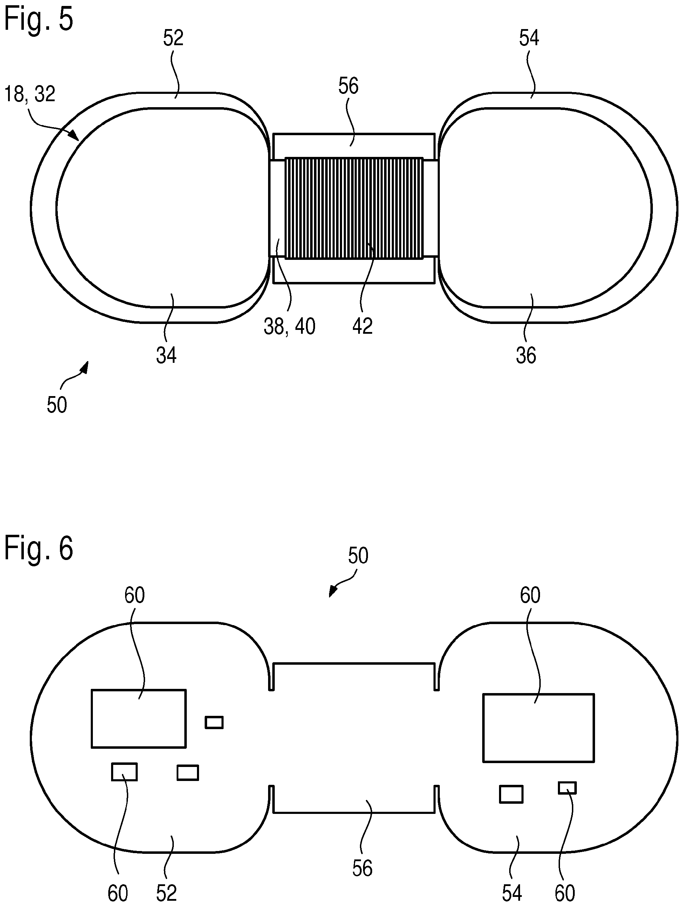

Fig. 5 zeigt in einer Draufsicht das auf einer flexiblen Leiterplatte 50 angeordnete Antennenelement 18 mit dem ersten und zweiten Folienelement 34 bzw. 36 sowie die Draht- oder Spulenwicklung 42 um das als Spulenkern 40 ausgeführte dritte Folienelement 38 in flacher Ausführungsform vor der Montage. Die flexible Leiterplatte 50 weist dabei einen ersten Bereich 52, einen zweiten Bereich 54 sowie einen dritten Bereich 56 auf, wobei der erste, der zweite und der dritte Bereich 52, 54 und 56 zusammenhängend gebildet sind. An diesen sind das erste, das zweite und das dritte Folienelement 34, 36 und 38 der Folienstruktur 32 angeordnet. Die Abschirmung 44 ist dabei als eine Kupferlage der flexiblen Leiterplatte 50 ausgeführt, wodurch eine einfache und stabile Herstellung der Abschirmung gegeben ist.

Für die Montage des Antennenelements 18 und der flexiblen Leiterplatte 50 an den Energiespeicher 16 erfolgt geeigneter Weise zunächst ein Abwinkeln des ersten und zweiten Folienelements der Folienstruktur und der daran angeordneten Bereiche der flexiblen Leiterplatte 54 und 56. Zeitgleich oder anschließend werden das erste und zweite Folienelement 34, 36 der Folienstruktur 30 sowie der erste und zweite Bereich 52, 54 der flexiblen Leiterplatte 50 an den Stirnseiten 28 des Energieträgers 16 angeordnet. Dabei deckt die dem Energiespeicher 16 zugewandte Leiterplatte 50 die Stirnseiten 28 des Energieträgers 16 vollständig ab.

Fig. 6 zeigt in Draufsicht die der Folienstruktur 32 abgewandte beziehungsweise im Montagezustand dem Energiespeicher 16 zugewandte Seite der flexiblen Leiterplatte 50 aus Fig. 5. An die flexible Leiterplatte 50 sind weitere elektronische Hörgerätekomponenten 60, beispielsweise eine Komponente der Sende- und/oder Empfangseinheit 19, eine Ladeelektronik oder Anschlüsse für den Energiespeicher 16. Sie sind im ersten und zweiten Bereich 52 und 54 der flexiblen Leiterplatte 50 im Wesentlichen zentral angebracht. Auf Grund der Abschirmung 44 sind die elektronischen Komponenten 60 vor Magnetfeldern abgeschirmt, und Störungen des Antennenelements 18 durch etwaige Magnetfelder, die betriebsbedingt in der Hörgerätekomponente 60 hervorgerufen werden, sind vermindert.

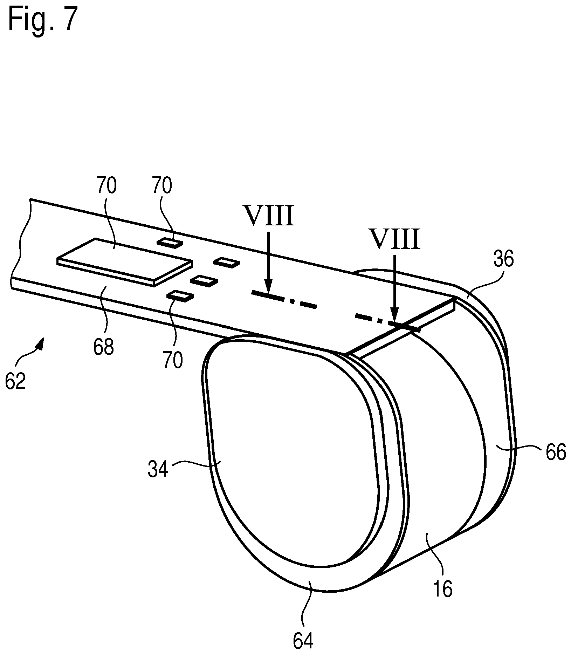

Fig. 7 zeigt in perspektivischer Ansicht das an den Stirnseiten 28 des Energiespeichers 16 angeordnete erste und zweite Folienelement 34, 36 sowie eine Hörgeräteplatine 62. Das erste und zweite Folienelement 34, 36 der Folienstruktur sind an einen ersten Bereich 64 beziehungsweise an einen zweiten Bereich 66 der Hörgeräteplatine 62 angeordnet. Die Platinenbereiche 64, 66 der Hörgeräteplatine 62 sind an den Stirnseiten 28 des Energiespeichers 16 angeordnet, wobei die Abschirmung 44 als Kupferlagen 58 der Platine oder Leiterplatte 62 ausgeführt sind. Das dritte Folienelement 38, welches den Spulenkern 40 des Antennenelements 18 bildet, ist hier in einen dritten Bereich 68 der Hörgerätplatine 62 integriert. Diese trägt weitere Komponenten 70 des Hörhilfegeräts 4, insbesondere Verstärkerschaltungen und/oder Elektronikbauteile.

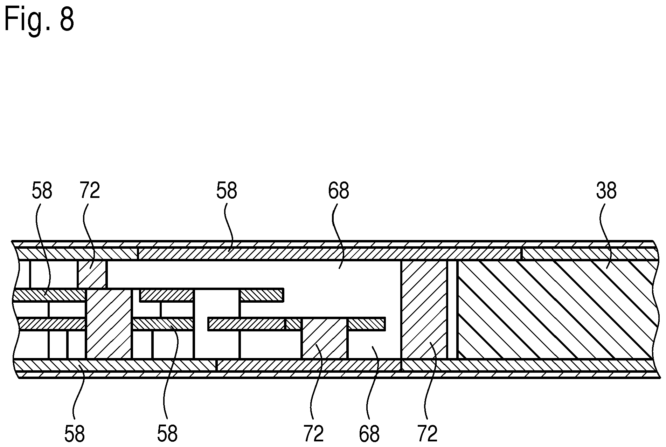

Fig. 8 zeigt in einer Schnittdarstellung den Bereich des dritten Bereichs 68 der Hörgerätplatine 62 zwischen den Linien VIII-VIII aus der Fig. 7. Das dritte Folienelement 38 der Folienstruktur 32, welches den Spulenkern 40 des Antennenelements 18 bildet, ist in die Hörgeräteplatine 62 integriert. Dabei ist die Draht- oder Spulenwicklung 42 aus mittels Durchkontaktierungen 72 elektrisch kontaktierten Leiterbahnen der Hörgerätplatine 62 gebildet, wodurch eine aufwendige und empfindliche Wicklung der Draht- oder Spulenwicklung 42 vermieden ist. Die Abschirmung 44 ist dabei mittels der Kupferlage 58 der Hörgerätplatine 50 ausgeführt. Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen.

### Bezugszeichenliste

- 2: Hörgerätesystem
- 4: Hör-/Hörhilfegerät
- 6: Gehäuse
- 8: Mikrofon
- 10: Schallwandler
- 12: Signalverarbeitungseinheit
- 14: Lautsprecher
- 16: Energiespeicher
- 18: Antennenelement
- 19: Sende- und/oder Empfangseinheit
- 20: drahtlose Signalübertragung
- 22: weiteres Gerät
- 24: Pfeil/Funkkommunikation
- 26: Pfeil/Energieübertragung
- 27: Ladegerät
- 28: Stirnseite
- 30: Umfangsbereich
- 32: Folienstruktur
- 34: erstes Folienelement
- 36: zweites Folienelement
- 38: drittes Folienelement
- 40: Spulenkern
- 42: Draht- oder Spulenwicklung44 Abschirmung
- 46: Kupferfolie
- 48: Mantelschirm
- 50: flexible Leiterplatte
- 52: erster Bereich der Leiterplatte
- 54: zweiter Bereich der Leiterplatte
- 56: dritter Bereich der Leiterplatte
- 58: Kupferlage
- 60: elektronische Hörgerätekomponente
- 62: Hörgerätplatine/-leiterplatte
- 64: erster Bereich der Hörgerätplatine
- 66: zweiter Bereich der Hörgerätplatine
- 68: dritter Bereich der Hörgerätplatine
- 70: Komponenten des Hörgeräts
- 72: Durchkontaktierung

- L: Längsrichtung

## Patentansprüche

1. Hörgerät (4), insbesondere Hinter-dem-Ohr-Hörhilfegerät, mit einem wiederaufladbarem Energiespeicher, einer Sende- und/oder Empfangseinheit (19) mit einem Antennenelement (18) zur drahtlosen Signalübertragung (20) und zur induktiven Energieübertragung (26) zum Laden des Energiespeichers (16),
- wobei das Antennenelement (18) als eine Folienstruktur (32) ausgebildet ist, welche den Energiespeicher (16) zumindest abschnittsweise umgreift,
**dadurch gekennzeichnet,**
- **dass** die Folienstruktur (32) des Antennenelements (18) aus einem ferro- oder ferrimagnetischen Material ausgebildet ist,
- wobei die Folienstruktur (32) ein erstes und ein zweites Folienelement (34, 36) sowie ein drittes Folienelement (38) umfasst,
- wobei das erste und zweite Folienelement (34, 36) an gegenüberliegenden Stirnseiten (28) des Energiespeichers (16) angeordnet sind,
- wobei das dritte Folienelement (38) einen Umfangsbereich (30) des Energiespeichers (16) übergreift,
- wobei das dritte Folienelement (38) einen mit einer Draht- oder Spulenwicklung (42) versehenen Spulenkern (40) des Antennenelements (18) bildet, und
- wobei das erste und/oder zweite Folienelement (34, 36) die jeweilige Stirnseite (28) des Energiespeichers (16) zumindest teilweise überdeckt.

2. Hörgerät (4) nach Anspruch 1,
**dadurch gekennzeichnet,**
**dass** das erste und/oder zweite Folienelement (34,36) mindestens die halbe Stirnseitenfläche der jeweiligen Stirnseite (28) des Energiespeichers (16) überdeckt.

3. Hörgerät (4) nach Anspruch 1 oder 2,
**gekennzeichnet durch**
eine zwischen der Folienstruktur (32) des Antennenelements (18) und dem Energiespeicher (16) angeordnete Abschirmung (44).

4. Hörgerät (4) nach Anspruch 3,
**dadurch gekennzeichnet,**
**dass** die Abschirmung (44) aus einem diamagnetischen oder paramagnetischen Material, insbesondere Kupfer, gebildet ist oder diamagnetisches bzw. paramagnetisches Material enthält.

5. Hörgerät (4) nach Anspruch 3 oder 4,
**dadurch gekennzeichnet,**
**dass** die Abschirmung (44) von der Folienstruktur (32) des Antennenelementes (18) zumindest teilweise abgedeckt ist.

6. Hörgerät (4) nach einem der Ansprüche 3 bis 5,
**dadurch gekennzeichnet,**
**dass** die Abschirmung (44) in eine, insbesondere flexible, Leiterplatte (50) eingebracht ist, die an der dem Energiespeicher (16) zugewandten Plattenfläche eine elektronische Hörgerätekomponente (60, 70), insbesondere der Sende- und/oder Empfangseinheit (19), trägt.

7. Hörgerät (4) nach Anspruch 6,
**dadurch gekennzeichnet,**
**dass** die Folienstruktur (32) zumindest teilweise in eine zumindest eine der Hörgerätekomponenten (60, 70) tragende Leiterplatte (62) integriert ist.

8. Hörgerät (4) nach einem der Ansprüche 1 bis 7,
**dadurch gekennzeichnet,**
**dass** der Energiespeicher (16) zumindest teilweise von einem manschettenartigen Mantelschirm (48) als Bestandteil der Abschirmung (44) umgeben ist.

9. Hörgerät (4) nach einem der Ansprüche 1 bis 8,
**dadurch gekennzeichnet,**
**dass** ist die Permeabilität der Folienstruktur (32) des Antennenelements (18) größer als die Permeabilität der Abschirmung (44) ist, und dass die elektrische Leitfähigkeit des Materials der Abschirmung (44) größer als die elektrische Leitfähigkeit der Folienstruktur (32) des Antennenelements (18) ist.

## Claims

1. Hearing aid (4), in particular behind-the-ear hearing aid, with a rechargeable energy storage, a transmitting and/or receiving unit (19) with an antenna element (18) for wireless signal transmission (20) and for inductive energy transmission (26) for charging of the energy storage (16)
- wherein the antenna element (18) is designed as a film structure (32) surrounding the energy storage (16) at least in sections, **characterized in**
- **that** the film structure (32) of the antenna element (18) is formed of a ferromagnetic or ferrimagnetic material,
- wherein the film structure (32) comprises a first and a second film element (34, 36) and a third film element (38),
- wherein the first and second film element (34, 36) are arranged on opposite end faces (28) of the energy storage (16),
- wherein the third film element (38) engages over a peripheral region (30) of the energy storage (16),
- wherein the third film element (38) forms a coil core (40) of the antenna element (18) provided with a wire or coil winding (42), and
- wherein the first and/or second film element (34, 36) covers the respective end face (28) of the energy storage (16) at least partially.

2. Hearing aid (4) according to Claim 1,
**characterized in**
**that** the first and/or second film element (34, 36) covers at least half the end face surface of the respective end face (28) of the energy storage (16).

3. Hearing aid (4) according to Claim 1 or 2,
**characterized by**
a shield (44) arranged between the film structure (32) of the antenna element (18) and the energy storage (16).

4. Hearing aid (4) according to Claim 3,
**characterized in**
**that** the shield (44) is formed of a diamagnetic or paramagnetic material, in particular copper, or contains diamagnetic or paramagnetic material.

5. Hearing aid (4) according to Claim 3 or 4,
characterized,
that the shield (44) is at least partially covered by the film structure (32) of the antenna element (18).

6. Hearing aid (4) according to one of Claims 3 to 5,
**characterized in that**
that the shield (44) is introduced in a particularly flexible circuit board (50) which on the plate facing the energy storage (16) surface carries an electronic hearing aid component (60, 70), in particular of the sending and/or receiving unit (19).

7. Hearing aid (4) according to Claim 6,
**characterized in**
**that** the film structure (32) is integrated at least partially in a circuit board (62) carrying at least one of the hearing aid components (60, 70).

8. Hearing aid (4) according to one of Claims 1 to 7,
**characterized in**
**that** the energy storage (16) is at least partially surrounded by a sleeve-like sheath shield (48) as part of the shield (44).

9. Hearing aid (4) according to one of Claims 1 to 8,
**characterized in**
**that** the permeability of the film structure (32) of the antenna element (18) is greater than the permeability of the shield (44), and that the electrical conductivity of the material of the shield (44) is greater than the electrical conductivity of the film structure (32) of the antenna element (18).

## Revendications

1. Prothèse auditive (4), en particulier prothèse auditive contour d'oreille, avec un accumulateur d'énergie rechargeable, une unité d'émission et/ou de réception (19) avec un élément d'antenne (18) pour la transmission de signaux sans fil (20) et pour la transmission d'énergie inductive (26) pour charger l'accumulateur d'énergie (16),
- dans lequel l'élément d'antenne (18) est conçu comme une structure de film (32) entourant l'accumulateur d'énergie (16) au moins en sections,
**caractérisé en ce**
- **que** la structure de film (32) de l'élément d'antenne (18) est formée d'un matériau ferromagnétique ou ferrimagnétique,
- dans lequel la structure de film (32) comprend un premier et un deuxième élément de film (34, 36) et un troisième élément de film (38),
- dans lequel le premier et le deuxième élément de film (34, 36) sont disposés sur des faces frontales opposées (28) du l'accumulateur d'énergie (16),
- dans lequel le troisième élément de film (38) entoure une région périphérique (30) de l'accumulateur d'énergie (16),
- dans lequel le troisième élément de film (38) forme un noyau de bobine (40) de l'élément d'antenne (18) muni d'un enroulement de fil ou de bobine (42), et
- dans lequel le premier et/ou le deuxième élément de film (34, 36) recouvre la face frontale (28) respective du accumulateur d'énergie (16) au moins partiellement.

2. Prothèse auditive (4) selon la revendication 1,
**caractérisée en ce**
**que** le premier et/ou le deuxième élément de film (34, 36) recouvre au moins la moitié de la surface de la face frontale (28) respective du accumulateur d'énergie (16).

3. Prothèse auditive (4) selon la revendication 1 ou 2,
**caractérisée par**
un écran (44) disposé entre la structure de film (32) de l'élément d'antenne (18) et l'accumulateur d'énergie (16).

4. Prothèse auditive (4) selon la revendication 3,
**caractérisée en ce**
**que** le blindage (44) est formé d'un matériau diamagnétique ou paramagnétique, en particulier du cuivre, ou contient un matériau diamagnétique ou paramagnétique.

5. Prothèse auditive (4) selon la revendication 3 ou 4,
**caractérisée en ce**
**que** le blindage (44) est au moins partiellement recouvert par la structure de film (32) de l'élément d'antenne (18).

6. Prothèse auditive (4) selon l'une des revendications 3 à 5,
**caractérisée en ce**
**que** le blindage (44) est introduit dans une carte de circuit imprimé (50), en particulier flexible, qui sur la plaque faisant face à la surface du accumulateur d'énergie (16) porte un composant de prothèse auditive (60, 70), en particulier de l'unité d'émission et/ou de réception (19).

7. Prothèse auditive (4) selon la revendication 6,
**caractérisée en ce**
**que** la structure de film (32) est intégrée au moins partiellement dans une carte de circuit imprimé (62) portant au moins un des composants de prothèse auditive (60, 70).

8. Prothèse auditive (4) selon l'une des revendications 1 à 7,
**caractérisée en ce**
**que** l'accumulateur d'énergie (16) est au moins partiellement entouré d'une gaine de blindage en forme manchette (48) faisant partie du blindage (44).

9. Prothèse auditive (4) selon l'une des revendications 1 à 8,
**caractérisée en ce**
**que** la perméabilité de la structure de film (32) de l'élément d'antenne (18) est supérieure à la perméabilité du blindage (44), et que la conductivité électrique du matériau du blindage (44) est supérieure à la conductivité électrique de la structure de film (32) de l'élément d'antenne (18).
